# DEMANDE DE BREVET EUROPEEN

(11) **EP 1 607 644 A2**
(43) Date de publication de la demande: **21.12.2005**
(21) Numéro de dépôt: 05300427.1
(22) Date de dépôt: 30.05.2005
(51) Int. Cl.: F16C 11/06

(54) **Articulation rotulante et application d'une telle articulation pour une commande d'embrayage**

(30) Priorité: 14.06.2004 FR 0451268
(71) Demandeur: Peugeot Citroen Automobiles SA, 78943 Vélizy-Villacoublay Cedex (FR)
(72) Inventeur:

(57) **Abrégé**

Articulation rotulante (6) constituée d'une rotule comportant une queue de rotule (8) filetée destinée à venir se visser sur un support (3) et une tête de rotule (9) de forme sensiblement sphérique coopérant avec un organe mobile (5), caractérisée en ce que la tête de rotule est réalisée sous la forme de deux pièces distinctes complémentaires.

Application d'une telle articulation à une commande d'embrayage.

## Description

La présente invention concerne une articulation rotulante et plus particulièrement la présente invention se rapporte à une rotule vissée sans empreinte apparente. La présente invention concerne également l'application d'une telle articulation pour une commande d'embrayage.

Les articulations rotulantes comportent classiquement une rotule composée d'une queue taraudée destinée à être vissée sur une pièce formant support et d'une tête de rotule présentant une forme sphérique destinée par exemple à coopérer avec une pièce mobile par l'intermédiaire d'une bague étanche à l'intérieur de laquelle se trouve logée la tête de rotule. Ladite bague est remplie de graisse de façon à permettre un bon déplacement de la pièce mobile autour de la tête sphérique et une lubrification à vie de celle-ci.

La demande de brevet FR2791100 décrit ainsi une articulation rotulante constituée d'une rotule comportant une queue de rotule montée fixement sur une pièce fixe et une tête de rotule de forme sphérique coopérant avec une pièces mobile. Selon cette réalisation, la tête de rotule est en contact permanent avec une plaque pourvue en son centre d'une forme complémentaire à la tête de rotule solidaire de la pièce mobile et qui est munie sur la face de la plaque en contact avec la tête de rotule d'une revêtement présentant un faible coefficient de frottement.

La tête de rotule est enserrée par un soufflet d'étanchéité rendu solidaire de la pièce mobile par l'intermédiaire d'au moins une patte saillante destinée à s'engager et à se clipper dans un orifice correspondant de la pièce mobile.

Pour le vissage de la rotule sur son support, il est connu de former sur la tête de rotule une empreinte appropriée, par exemple de type Torx ou Tampertorx. Bien évidemment la forme de cette empreinte est directement liée à la nature de l'outillage utilisé pour le vissage de la rotule au niveau de chaîne de montage. Cette empreinte pourrait donc tout aussi bien hexagonale (clé Allen), Pozidriv, Phillips (ou cruciforme) ou bien simplement formée par une fente.

Quelle que soit sa forme, l'empreinte ainsi réalisée sur la rotule, notamment du fait des bords qu'elle crée, peut être à même, d'user la coupelle à faible coefficient de friction et donc de venir également user la fourchette . Cette empreinte diminue par ailleurs la surface de contact , et par ce fait augmente la pression de contact et donc l'usure.

Le but de la présente invention est de remédier à cet inconvénient mentionné ci-dessus.

A cet effet, la présente invention à pour objet une articulation rotulante constituée d'une rotule comportant une queue de rotule filetée destinée à venir se visser sur un support et une tête de rotule de forme sensiblement sphérique coopérant avec un organe mobile.

Selon l'invention l'articulation est caractérisée en ce que la tête de rotule est réalisée sous la forme de deux pièces distinctes complémentaires.

Selon une autre caractéristique de l'articulation rotulante objet de l'invention, la tête de rotule est enserrée par un soufflet destiné à être rendu solidaire de l'organe mobile.

Selon une autre caractéristique de l'articulation rotulante objet de l'invention, le soufflet est rendu solidaire de l'organe mobile par l'intermédiaire d'au moins une patte saillant du soufflet et destinée à s'engager et à se clipper dans un orifice correspondant de l'organe.

Selon une autre caractéristique de l'articulation rotulante objet de l'invention, entre l'organe mobile et la tête de rotule est interposée une plaque dont la face en contact avec la tête de rotule est munie d'un revêtement présentant un faible coefficient de frottement.

Selon une autre caractéristique de l'articulation rotulante objet de l'invention, la première pièce s'étend dans le prolongement de la queue de rotule avec laquelle elle fait corps et en ce que la seconde pièce est de forme sensiblement hémisphérique.

Selon une autre caractéristique de l'articulation rotulante objet de l'invention, la première pièce présente une empreinte appropriée permettant le vissage de la queue de rotule sur son support.

Selon une autre caractéristique de l'articulation rotulante objet de l'invention, la seconde pièce présente un téton adapté faisant saillie, ce téton étant destiné à venir se loger dans l'empreinte de la première pièce.

Selon une autre caractéristique de l'articulation rotulante objet de l'invention, la première pièce est enserrée par le soufflet, ce soufflet venant forcer la seconde pièce contre la première pièce.

Selon une autre caractéristique de l'articulation rotulante objet de l'invention, les deux pièces formant la tête de rotule sont réalisées dans des matériaux distincts.

La présente invention concerne également une commande d'embrayage notamment pour véhicule automobile comportant un levier monté pivotant sur une articulation dans sa partie centrale sur un support fixe et dont l'une de ses extrémités est reliée à un moyen d'actionnement et dont l'autre extrémité en forme de fourchette coopère avec une butée d'embrayage.

La présente invention et ses avantages seront mieux compris à l'étude de la description détaillée d'un mode de réalisation donné à titre d'exemple non limitatif et illustré par les dessins annexés, sur lesquels :
- la figure 1 est une vue en perspective d'une commande d'embrayage équipée d'une articulation rotulante selon l'invention ;
- la figure 2 est une vue en coupe longitudinale de la commande d'embrayage disposée dans un carter de boîte de vitesses ;
- la figure 3 représente des vues en perspective d'une rotule selon l'invention.

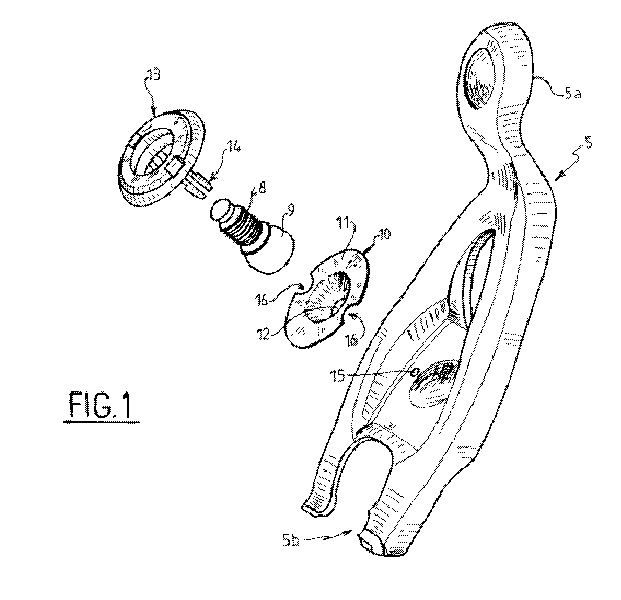

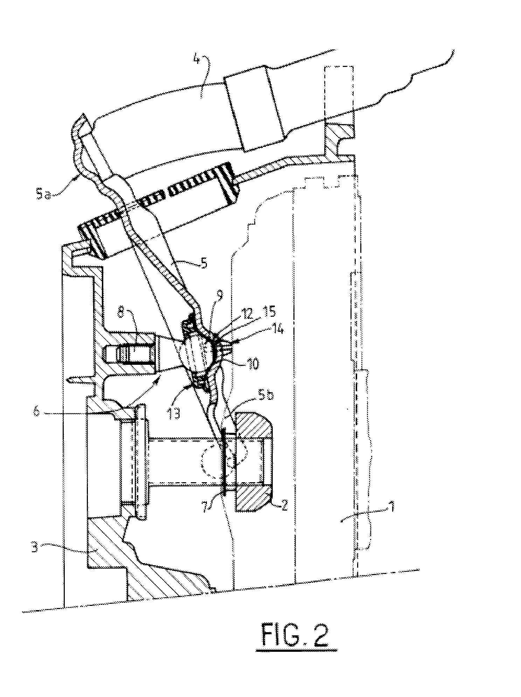

On a représenté aux figure 1 et 2, une commande d'embrayage, notamment pour véhicule automobile, constituée de manière classique d'un embrayage 1 dont seul la butée 2 est représentée, ledit embrayage étant prévu entre le moteur non visible sur les figures, et une boîte de vitesses, représentée par son carter 3.

Cette commande d'embrayage représentée sur les figures est une commande hydraulique, constitué d'un vérin 4 qui agit sur une extrémité 5a d'un levier à fourchette 5, pivotant sur une articulation 6 solidaire du carter 3 de boîte de vitesses.

L'autre extrémité 5b du levier 5 est maintenue en contact permanent avec la butée 2 par l'intermédiaire d'un ressort 7.

L'ensemble du dispositif de commande et son fonctionnement bien connu en soi ne seront pas décrit plus en détail par la suite de la description.

Selon la présente invention, l'articulation 6 du levier 5 est constituée d'une articulation rotulante comportant une queue de rotule 8 montée fixement par l'intermédiaire d'un filetage sur le carter 3 de la boîte de vitesses formant support de rotule et d'une tête de rotule 9 sensiblement sphérique qui coopère avec une plaque 10 ou coussinet de rotule munie en son centre d'une forme complémentaire à la tête de rotule 9 du type calotte sphérique. Ladite plaque 10 ou coussinet est avantageusement interposé entre le levier 5 et la tête de rotule 9.

Ce coussinet de rotule 10 est pourvu sur la face 11 en contact avec la tête de rotule 9 d'un revêtement présentant un très faible coefficient de friction.

Ce revêtement est constitué par exemple de résine fluorées dans lesquelles est insérée une trame métallique du type bronze étain..

Selon une variante, le revêtement de la face en contact avec la tête de rotule est constitué uniquement de résines fluorés du type Téflon.

Le coussinet 10 peut être est également muni en son centre d'un orifice 12, comme visible plus clairement sur la figure 1. Un tel orifice quant il existe est destiné à la canalisation du fluage du revêtement lors des sollicitations de l'articulation 6.

Afin d'assurer le maintient du levier 5 sur la tête de rotule 9, un soufflet d'étanchéité 13 enserrant la tête de rotule 9 est muni d'au moins une patte de fixation 14 saillant perpendiculairement au soufflet 13 en direction du levier 5 apte à s'engager et à se clipper dans un orifice 15 correspondant du levier 5.

On notera qu'avantageusement les pattes 14 de fixation du soufflet 13 traversent la plaque 10 ou coussinet notamment par l'intermédiaire de trou oblong 16 immobilisant ainsi cette dernière en rotation sur le levier 5.

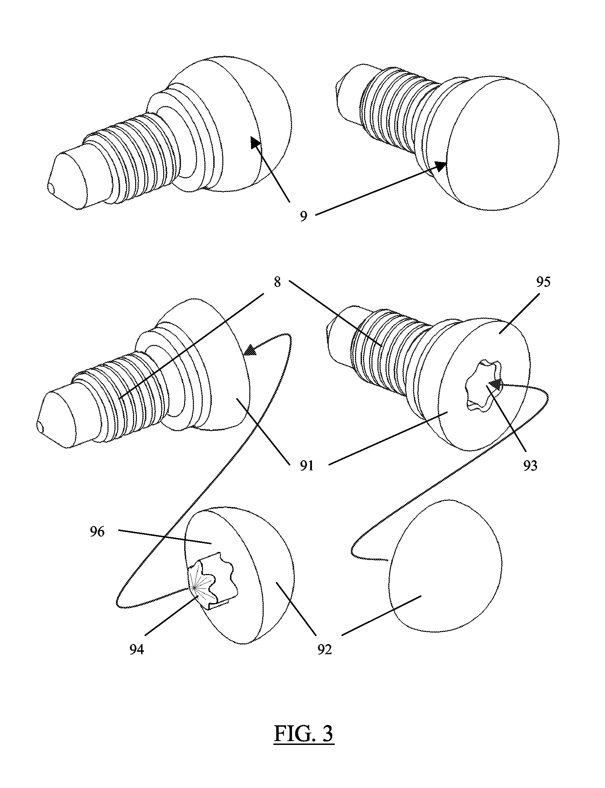

En se reportant sur la figure 3, la rotule selon l'invention y a été détaillée. La tête de rotule est constituée de deux pièces distinctes 91 et 92 de formes complémentaires.

La première pièce 91 qui fait corps avec la queue 8 présente une extrémité évasée se terminant par une face plane 95. Sur cette face plane 95 débouche une empreinte 93 de type Torx permettant le vissage de la rotule sur son support 3.

La seconde pièce 92 est de forme sensiblement hémisphérique Elle comporte un téton 94 en saillie sur sa face plane 96. Ce téton 94 de forme complémentaire à celle de l'empreinte est destiné à pénétrer dans l'empreinte 93 et assurer ainsi le positionnement de la pièce 92 sur la pièce 91.

Le soufflet qui vient enserrer la pièce 91 permet alors l'immobilisation de la pièce 92 contre la pièce 91.

Ainsi grâce à cette disposition l'empreinte 93 n'est plus apparente et n'est donc plus susceptible de venir endommager le coussinet 10.

Il est par ailleurs à noter que cette disposition peut permettre d'utiliser des matériaux de nature différente pour la constitution des deux pièces formant la tête de rotule.

Bien entendu, la présente invention n'est pas limitée au mode de réalisation que l'on vient de décrire, et on peut apporter à ceux-ci de nombreux changements et modifications sans sortir de la présente invention.

Ainsi, bien que l'invention ait été décrite en liaison avec un mode de réalisation particulier, l'articulation selon l'invention peut s'appliquer à tout type d'articulation rotulante. Elle comprend également tous les équivalents techniques des moyens décrits.

## Revendications

1. Articulation rotulante (6) constituée d'une rotule comportant une queue de rotule (8) filetée destinée à venir se visser sur un support (3) et une tête de rotule (9) de forme sensiblement sphérique coopérant avec un organe mobile (5), **caractérisée en ce que** la tête de rotule est réalisée sous la forme d'une première et d'une seconde pièces distinctes complémentaires (91,92), ladite première pièce (91) présentant une empreinte (93) appropriée permettant le vissage de ladite queue de rotule (8) sur ledit support (3).

2. Articulation rotulante (6) selon la revendication 1, **caractérisée en ce que** ladite tête de rotule (9) est enserrée par un soufflet (13) destiné à être rendu solitaire dudit organe mobile (5).

3. Articulation rotulante (6) selon l'une quelconque des revendications 1 à 2, **caractérisée en ce que** ledit soufflet (13) est rendu solidaire dudit organe (5) par l'intermédiaire d'au moins une patte (14) saillant du soufflet (13) destinée à s'engager et à se clipper dans un orifice correspondant dudit organe (5).

4. Articulation rotulante (6) selon l'une quelconque des revendications 1 à 3, **caractérisée en ce qu'**entre ledit organe (5) et ladite tête de rotule (9) est interposée une plaque (10) dont la face en contact avec ladite tête de rotule (9) est munie d'un revêtement présentant un faible coefficient de frottement.

5. Articulation rotulante (6) selon l'une quelconque des revendications 1 à 4, **caractérisée en ce que** la première pièce (91) s'étend dans le prolongement de ladite queue de rotule (8) avec laquelle elle fait corps et **en ce que** la seconde pièce (92) est de forme sensiblement hémisphérique.

6. Articulation rotulante (6) selon l'une quelconque des revendications 1 à 5, **caractérisée en ce que** ladite seconde pièce (92) présente un téton adapté (94) faisant saillie, ledit téton (94) étant destiné à venir se loger dans ladite empreinte (93).

7. Articulation rotulante (6) selon les revendications 2 et 5, **caractérisée en ce que** ladite première pièce (91) est enserrée par ledit soufflet (13), ledit soufflet (13) venant forcer ladite seconde pièce (92) contre ladite première pièce (91).

8. Articulation rotulante (6) selon l'une quelconque des revendications 1 à 7, **caractérisée en ce que** lesdites première et seconde pièces (91, 92) sont réalisées dans des matériaux distincts.

9. Commande d'embrayage notamment pour véhicule automobile comportant un levier (5) monté pivotant sur une articulation (6) dans sa partie centrale sur un support fixe (3) et dont l'une de ses extrémités (5a) est reliée à un moyen d'actionnement et dont l'autre extrémité (5b) en forme de fourchette coopère avec une butée (2) d'embrayage, **caractérisée en ce que** l'articulation est une articulation rotulante (6) conforme à l'une quelconque des revendications précédentes.
